# EUROPEAN PATENT APPLICATION

(11) **EP 3 410 156 A1**
(43) Date of publication of application: **05.12.2018**
(21) Application number: 17174193.7
(22) Date of filing: 02.06.2017
(51) Int. Cl.: G01S 19/21, G01S 5/02, H04K 3/00, H04L 9/32

(54) **POSITIONING INFORMATION VERIFICATION**

(71) Applicant: Nokia Technologies Oy, 02610 Espoo (FI)
(72) Inventor: MARTÍN LÓPEZ, Enrique, Cambridge, CB4 3DN (GB); ROENNOW, Troels, Cambridge, CB2 9BG (GB); PALYUTINA, Karina, Cambridge, CB4 3HA (GB)
(74) Representative: Seppo Laine Oy

(57) **Abstract**

According to an example aspect of the present invention, there is provided a method, comprising: receiving, by a positioning information receiver, an authentication information element from a positioning information source, requesting verification of authenticity of the positioning information source on the basis of the authentication information element and a distributed ledger of verified positioning information sources, and establishing a cryptographic session with the positioning information source for receiving positioning information in response to receiving an indication of verification of authenticity of the positioning information source.

## Description

### FIELD

The present invention relates to verification of positioning information, and in particular to verifying authenticity of received positioning signals or data.

### BACKGROUND

GPS (Global Positioning System) is a global navigation satellite system that provides geolocation and time information to a GPS receiver in all weather conditions, anywhere on or near the Earth where there is an unobstructed line of sight to four or more GPS satellites.

Location mocking refers circumventing a positioning device, such the GPS receiver of a device, to feed custom geolocation coordinates to a service running in the device. Such possibility is useful software developer tool, but misusing it for cheating location-based applications is a current problem.

Location mocking can lead to considerable losses, for instance, to internet services based on location. Some popular internet services use GPS location to find people near you, and they charge a premium to allow browsing people outside of your area. Additionally, online games with in-app purchases are entirely based on the player moving around the real world with its own device. Bot attacks, wherein automatic players are flooding the game), can cause legitimate players abandon the game and have an obvious physical impediment of having to change their location in the real world. However, if location mocking is used, the movement of a player can be simulated using an emulator running on a stationary machine. It is possible set upper bounds in velocity to move between subsequent GPS signals. However, there is need for improvements for detecting false GPS signals.

### SUMMARY

The invention is defined by the features of the independent claims. Some specific embodiments are defined in the dependent claims. According to a first aspect of the present invention, there is provided an apparatus comprising at least one processor, at least one memory including computer program code, the at least one memory and the computer program code being configured to, with the at least one processor, cause the apparatus at least to: receive an authentication information element from a positioning information source, request verification of authenticity of the positioning information source on the basis of the authentication information element and a distributed ledger of verified positioning information sources, and establish a cryptographic session with the positioning information source for receiving positioning information in response to receiving an indication of verification of authenticity of the positioning information source.

According to a second aspect of the present invention, there is provided a method, comprising: receiving, by a positioning information receiver, an authentication information element from a positioning information source, requesting verification of authenticity of the positioning information source on the basis of the authentication information element and a distributed ledger of verified positioning information sources, and establishing a cryptographic session with the positioning information source for receiving positioning information in response to receiving an indication of verification of authenticity of the positioning information source.According to an embodiment, the apparatus is caused to verify authenticity of received positioning information on the basis of a signature provided with the received positioning information during the session, and the apparatus is caused to define a received positioning signal as mock signal in response to failing to receive an appropriate signature for the signal or the verification of the signature associated with the signal failing.

According to an embodiment, the distributed ledger is a private blockchain ledger, generated by transactions of fabricated positioning devices added by positioning device manufacturers, and verification of the authenticity of the positioning information source is requested on the basis of the blockchain ledger though an application programming interface or one or more intermediate blockchain nodes.

### BRIEF DESCRIPTION OF THE DRAWINGS

FIGURE 1 illustrates an example system capable of supporting at least some embodiments of the present invention;
FIGURE 2 illustrates a method in accordance with at least some embodiments of the present invention;
FIGURE 3 illustrates an example transaction record;
FIGURE 4 illustrates signalling in accordance with at least some embodiments of the present invention;
FIGURE 5 illustrates a method in accordance with at least some embodiments of the present invention, and
FIGURE 6 illustrates an apparatus in accordance with at least some embodiments of the present invention.

### EMBODIMENTS

There is now provided a method and apparatus facilitating live verification of positioning information by utilizing a distributed ledger, referring to a distributed network, storage or database at least storing authentication information for verifying authenticity of a positioning device and/or signal. A non-limiting example of such distributed ledger is a blockchain ledger.

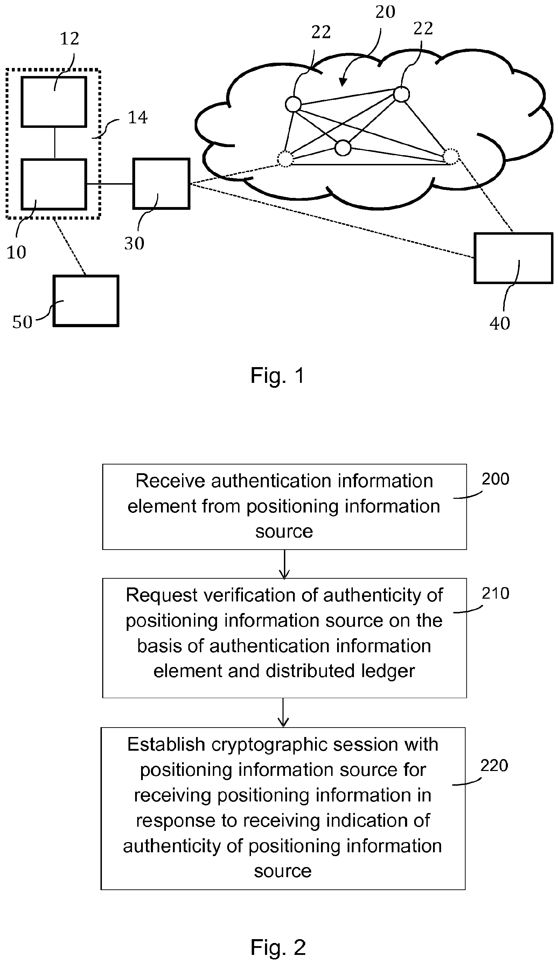

FIGURE 1 illustrates an example system in accordance with at least some embodiments of the present invention. A positioning information source 12 provides position information or positioning related information to a positioning information receiver 10. As illustrated in some embodiments below, the positioning information source 12 may be a positioning device, such as a GPS, Galileo, Glonass, BeiDou or another global or regional satellite-based receiver device, a device providing non-satellite based positioning information, such as a mobile network based positioning device or an indoor positioning device, or a positioning device combining two or more positioning techniques. The positioning information may comprise the location of and as defined by the positioning device or information for determining the location.

The positioning information receiver 10 may be a specific physical and/or operational unit, such as an application or a software service implemented by a program executed in a processor, for example. In some embodiments, the positioning information source 12 and the positioning information receiver are located in a single electronic device 14 and connected internally in the device 14. In other embodiments, they are located in separate electronic devices and may communicate via one or more wireless and/or fixed networks and/or intermediate devices. Such electronic device may be a user device, such as a laptop/tablet computer, a smartphone or a wearable, a machine-to-machine (M2M) device, or any other apparatus provided with communication capability, for example.

FIGURE 1 illustrates that the positioning information receiver 10 is connectable to a verifier unit 30 for at least positioning information verification purposes. Such verifier unit 30 may be a specific physical and/or operational unit connected to a distributed network 20 comprising nodes 22, such as a blockchain network comprising blockchain nodes. The verifier unit 30 may host a full blockchain node, making the device a part of the blockchain network.

In some embodiments, the verifier unit 30 is network node provided in or via a wireless network by a network operator or a positioning device manufacturer, or a representative of such manufacturers. The distributed network 20 may store a distributed ledger comprising information of trusted positioning information sources 12. Such network 20 may be a private blockchain network between manufacturers of positioning devices. Each manufacturer's node 40 may update the distributed ledger with information of newly fabricated positioning devices to the distributed ledger for facilitating positioning source authenticity verification.

The verifier unit 30 may provide an interface for the positioning information receiver 10 for checking authenticity of the positioning information source 12. Such check may be performed during reception of position information from the positioning information source 12, facilitating live positioning signal authentication.

An application programming interface (API) may be provided in the electronic device 14 for the positioning information receiver 10 to request the authenticity verification. In some embodiments the verifier unit 30 is at least partly implemented in the electronic device 14. The electronic device may host a light blockchain node, which is capable to accessing the distributed ledger.

The distributed network nodes 22, 30, 40 may generally comprise corporate, authority, and/or user devices, such as a server, a desktop/tablet/laptop computer, smartphone, or other suitable electronic device. The system may comprise an administrator or management node, a hub, relay or other kind of intermediate device for connecting a node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, other peer-to-peer networking models are also suitable.

The positioning information receiver 10 or the device 14 may connect further devices 50 (only one indicated for simplicity) via a wireless connection. In some embodiments, a local network may be formed by such devices 14, 50 for facilitating positioning signal authentication by consensus procedure within such network.

FIGURE 2 illustrates a method according to some embodiments. The method may be implemented by the positioning information receiver 10, and by the communications device 14, for example.

An authentication information element is received 200 from a positioning information source for identifying or authenticating the positioning information source, such as a GPS receiver. The authentication information element may be received during authentication of the positioning device or during reception of positioning information.

Verification of authenticity of the positioning information source is requested 210 on the basis of the authentication information element and a distributed ledger of verified positioning information sources. Thus, the request for verifying the source on the basis of the distributed ledger may comprise at least the authentication information element and/or some other identification of the positioning information source. A specific request may be sent for another device or unit, such as the device 30, or in some embodiments the request may be to an API via which the ledger may be accessed. The term distributed ledger is to be understood broadly, and may in some embodiments be provided by a distributed database, for example.

A cryptographic session is established 220 with the positioning information source for receiving positioning information in response to receiving an indication of verification of authenticity of the positioning information source. In response to the verification failing, the information source is considered as untrusted and the received positioning signal may be set or flagged as mock signal.

As part of and after block 220, the positioning information receiver 10 may receive positioning information and verify authenticity of received positioning information during the session.

In an embodiment, authenticity of received positioning information is verified on the basis of a signature provided with the received positioning information. A shared secret may be established with the positioning information source for the session, and the authenticity of the received positioning information on the basis of the shared secret. A received positioning signal may thus be defined as as mock signal in response to failing to receive an appropriate signature for the signal or the verification of the signature associated with the signal failing.

In some embodiments, the authentication information element is a public cryptography key stored in the distributed ledger and associated with a secret cryptography key of the positioning information source 12. However, it is to be appreciated that various other options and authentication information are available for arranging the authenticity verification of the information source. For example, authenticity verification methods based on shared secret, such as secret password may be applied. Thus, the verifier unit 30 may request the source 12 for evidence that it knows the secret password. The piece of evidence can be a subset of the secret, a hash of the secret, a subset of the hash of the secret, to name a few examples. Examples of applicable point-to-point authentication protocols (PPP) include password authentication protocol (PAP), challenge-handshake authentication protocol (CHAP), and extensible authentication protocol EAP.

The distributed ledger may be a private blockchain ledger, generated by transactions of fabricated positioning devices added by positioning device manufacturers. Verification of the authenticity of the positioning information source may thus be requested on the basis of the blockchain ledger though an application programming interface or one or more intermediate blockchain nodes.

According to some embodiments, a distributed ledger of verified-device public keys, which may be referred to as LedgerA, is maintained and used for the verification of the authenticity of the positioning information source 12. An example of this is provided below.

A communication network, such as a blockchain-based network, is established between verified manufacturers of positioning devices. Upon a successful verification procedure, which may be carried out offline, each manufacturer holds a pair of asymmetric keys that can be used for digital signature authentication (DSA). The network is private and can only be joined by other manufacturers by approval of the current members, in a verification procedure that may be carried out offline. In an example embodiment, the purpose of this network is to maintain a record of registered public keys corresponding to fabricated GPS receiver devices.

Each manufacturer node 22, 40 can emit a message containing the public key of a newly fabricated positioning device. Such message is digitally-signed with the private key of the manufacturer. Such (message, signature) pairs may form transactions, and are added to a block of transactions that each node in the network builds upon detecting a newly broadcast message and after verifying the corresponding signature.

In embodiments applying a blockchain-based system, the blockchain state information stored in or as the blockchain ledger shared by the nodes 22, 30, 40 may store all the transactions and history carried out in the network. Each node comprises the ledger whose content is in sync with other ledgers. The nodes may validate and commit transactions in order to reach consensus. Each node may have their own copy of the ledger which is in some embodiments permission-controlled, so participants see only appropriate transactions. Changes in resource ownership take the form of transactions secured by strong cryptography. A transaction may comprise an identifier of a new owner, that is the recipient, of the resource, together with a cryptographic signature of the previous owner, that is the sender, such that malicious attackers cannot re-assign resources they do not own. Application of blockchain technology and the ledger enable a way to track the unique history of transactions by the individual nodes in the network.

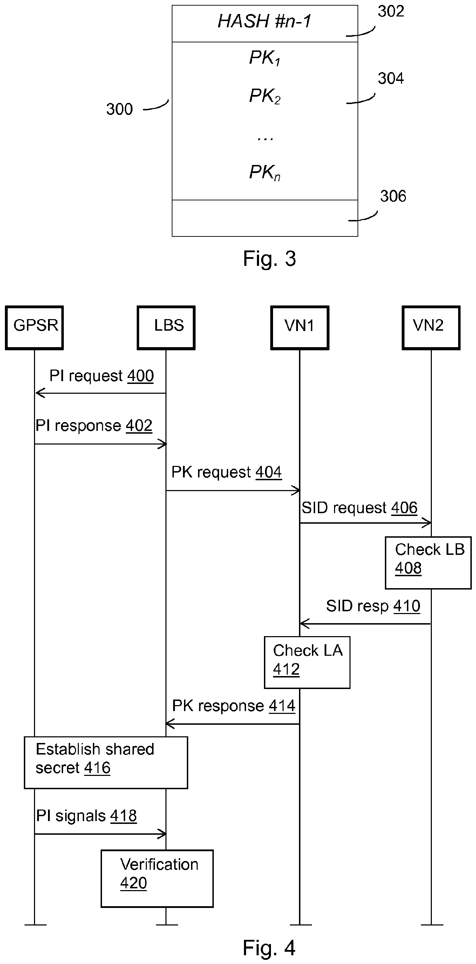

FIGURE 3 illustrates a simplified example of a blockchain transaction record *n* 300 that may be generated by a node 22, 40 for the distributed ledger. In an embodiment, each node 22, 40 proposes its block comprising public keys PK₁ to PKₙ 304 of positioning devices to be accepted as a set of verified-device public keys and one of them is accepted in a consensus mechanism. The consensus mechanism may be based on any decentralized consensus algorithm such as Proof of Work (PoW), Proof of Stake (PoS), or Practical Byzantine Fault Tolerance (PBFT). In another embodiment, the process of accepting a block can be carried out without such algorithm, such as taking turns, exploiting the fact that this is a private network of verified devices, although formed by manufacturer which may have competing financial interests.

In an embodiment, each accepted block is linked to the previous one using hash pointers 302, therefore leading to a blockchain structure that stores the verified-device public keys. The record may also comprise other information 306, such as other further authentication or verification facilitating information or information.

Once a new block including information on the verified devices is established, the blockchain becomes longer. A transaction is considered the more reliable, the larger the number of blocks established since the block where the transaction is comprised. This is since transactions are hashed into the chain of blocks, and discrepancies in the blockchain are resolved as the blockchain gets longer. In detail, maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

In another embodiment, the distributed ledger data structure is implemented without blockchain structure, such as adding the public keys in each new verified block to a distributed relational database (DRDA). In this way, a distributed ledger of verified positioning device public keys is achieved.

Once the set of verified positioning information sources is established, software service providers based on geolocation are the ones interested in making use of this data. The verified-device public key from the distributed ledger A can be made available by the positioning information source (receiver) device manufacturers by means of an API that would allow software service clients to check if a public key corresponds to a verified device.

An access control unit or device, for example by the verifier 30, may be provided for controlling access to the distributed ledger of verified positioning devices. Such access control unit may be configured to allow to the distributed ledger information only for authenticated and authorized requesting entities. However, access control may be arranged by as a protocol or method, in some embodiments by the positioning information receiver 10, such as the location-based software service.

In some embodiments, access control to the distributed (first) ledger, which may be referred to as ledger A, of verified positioning devices is arranged on the basis of another (second) distributed ledger, which may be referred to as ledger B. The ledger B may comprise identification or authentication information of positioning information receivers, such as software service clients, authorized to check, access or receive this information of verified positioning devices, e.g. via an API for this purpose.

Due to the decentralized nature of the distributed ledger A, the distributed ledger B may be similarly distributed. In an embodiment, DSA may be performed for a requesting positioning information receiver 10 on the basis of a public key and a corresponding private key. Thus, the request 210 may be signed by the secret key of the positioning information receiver 10 and verified on the basis of the associated public key.

The consensus about the distributed ledger B can be technically achieved in the same way as the first distributed ledger of verified devices, and similar format as illustrated in Figure 3 may be applied.

With reference to FIGURE 4, let us consider an example communication session between a GPS receiver GPSR and a location-based service LBS. Triggered by the software service requesting 400 position information (PI), e.g. current location of the device 14, the GPS receiver 10 authenticates itself to the location-based software service by a response message 402. This may communicate the public key (PK) of the GPS receiver to the software service.

The service requests 404 to verify this public key. In the example of FIGURE 4, the request is sent to a first verification node (VN1), such as the verifier node 30. The VN1 first requests 406 checking of a service identifier (SID) from the LBS, such as public key of the LBS, by a second verifier node (VN2), such as the node 40, or resource that can access the ledger B (LB). If the LBS as positioning information receiver is authorized on the basis of checking 408 the ledger B, VN2 indicates this in its response 410 to the VN1, which may then check 412 the ledger A (LA) for the PK of the GPS receiver. A response 414 to the request 404 is sent, which may indicate outcome of the verification of the service and/or the positioning information source.

In some alternative embodiments, the VN1 may directly check the ledger B, the PK request 404 may be directly sent to an API of the ledger A, or the VN2 checks the ledger A after authorization on the basis of checking the ledger B.

The request 404 will only go through if the LBS is included in the ledger B. If the public key of the receiver is not included in the ledger A, the signals will already be considered mock signals, which may be indicated in the response.

In response to the response 414 indicating the GPS receiver being authenticated, the cryptographic session may be established. A shared secret consisting of M bits in the present example is established 416 at the beginning of the session between the GPS receiver and the location-based software service. The shared secret may be established by using the Diffie-Hellman algorithm, for example.

Received PI signals 418 are verified 420, for example periodically. In an example, the session may comprise N signals and be divided in blocks of N/M signals. An M-bit shared secret may thus be established. Initial or final padding may be added if necessary to achieve an integer number of M blocks. The software service verifies via the API either the presence or absence of a signed signal according to the corresponding bit of the M-bit shared secret. In a live version of this example, the first p bits of the shared secret indicate the periodicity of the signature verification, that is, p points of live positioning information form a set that either gets signed or not. The remaining M-p bits indicate, in order, if the subsequent sets of live positioning points get signed ("1") or not ("0"). If the communication is longer than M-p sets of points, and the M-p bits are hence consumed, they are just used again from the start. Therefore, the verifier expects only some of the sets of points to be signed according to the shared secret.

If an unrequired signature is received or a required signature is not received, the GPS signal is flagged as outcome of the verification check 420 a mock one. Otherwise, upon receiving a required signature for a signal, such signature is verified 420, and the GPS signal is flagged as a mock one only if the verification fails. GPS signals keep being passed to the location-based software service until the session terminates (not shown). Following this protocol, live GPS signal authentication is achieved and location mocking is avoided.

GPS spoofing is an attack that attempts to deceive a GPS receiver by broadcasting incorrect GPS signals, structured to resemble a set of normal GPS signals, or by rebroadcasting genuine signals captured elsewhere or at a different time. GPS spoofing attacks are obviously problematic. To illustrate this, let's consider a common type called carry-off attack, which begins by broadcasting signals synchronized with the genuine signals observed by the target receiver. The power of the counterfeit signals may be gradually increased and drawn away from the genuine signals. Such this attack does not take direct control of the driving of the moving system. Instead, it tells an automatic driving system based on GPS that it is off its route, expecting it to "correct" its trajectory in such a way that the moving system enters an area decided by the attackers.

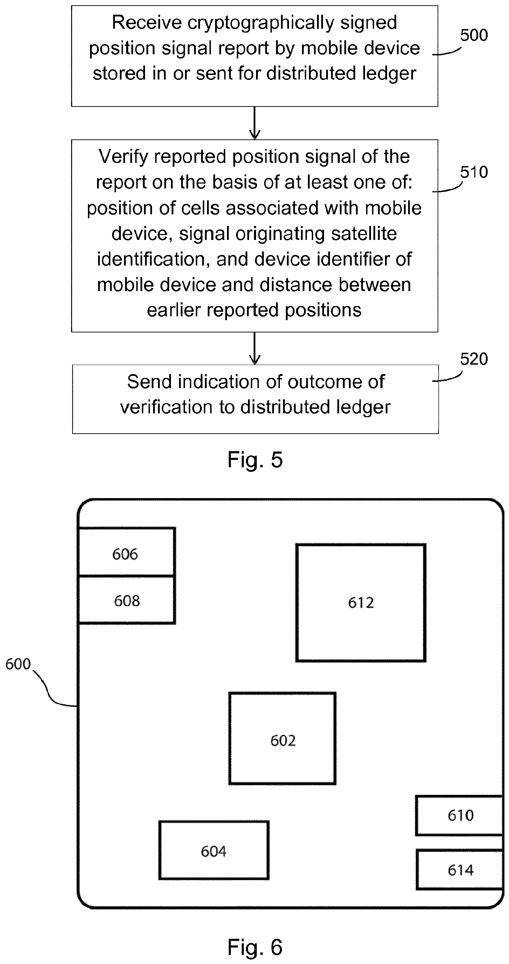

According to an aspect of the present invention, there is provided a method for peer-to-peer consensus based positioning signal authentication as illustrated in FIGURE 5. There is also provided an apparatus comprising at least one processor, at least one memory including computer program code, the at least one memory and the computer program code being configured to, with the at least one processor, cause the apparatus at least to: receive 500 a cryptographically signed position signal report by a mobile device and stored in or sent to a decentralized network, verify 510 the reported position signal of the report on the basis of at least one of position information of at least one cell associated with the mobile device, signal-originating satellite identification information in the received position reporting message, and device identifier of the mobile device and distance between earlier reported positions, and send 520 an indication of the outcome of the verification to the distributed network. The satellite identification information may be obtained on the basis of satellite position data associated with the received identifiers.

The apparatus may be a cellular mobile communication system base station, base station controller, or radio network controller configured to communicate with the mobile device.

According to an embodiment, the distributed network is a blockchain-based network and the position report is received from a blockchain client in the mobile device. A light blockchain client in the mobile device may be installed in a device with an embedded GPS receiver, such as a smartphone, further provided with a location-based software service (as the positioning information receiver 10). For example, with reference to a variation of FIGURE 1, the electronic device 14 could be the mobile device and further comprise blockchain node 30 connected to the blockchain-based network 20. The apparatus could be the device 40.

The apparatus may be configured to operate as a full node in the blockchain-based network. According to an embodiment, the apparatus is caused to generate a blockchain transaction comprising the indication and causing a consensus mechanism between blockchain nodes and adding of new blockchain block in response to verification of the transaction. The transactions are included in blocks of the blockchain following a consensus algorithm, such as PoS, PoW, or PBFT, with other full or mining nodes, such as base stations.

According to an embodiment, the apparatus is caused to verify the position information received in the report on the basis of triangulation of the position of the mobile device based on its distance to neighbouring base stations. The apparatus has access to cell ID data and is therefore able to triangulate the position of a customer based on its distance to different base stations.

According to an embodiment, the apparatus is caused to define or flag the positioning signal as mock signal in response to the verification failing, and provide an indication in the distributed network of the reported positioning signal from the mobile device being a mock signal. Thus, an alert may be caused for at least one of the mobile device and a service applying the positioning signal from the mobile device in response to a predefined number of mock signals being reported for the mobile device within a given time period.

Both positioning information sources 12 and positioning information receivers 10 can access the distributed network that includes flags of possible spoofing events. Recording such flags provides better privacy level than storing raw GPS locations. The number of flags in a given period of time can alert both GPS receivers and software services that their signals are being spoofed.

According to a still further embodiment, the apparatus is caused to receive the reporting message from a short-range radio device, the reporting message comprising a short-range radio device identifier and position information from a positioning device of the mobile device. The apparatus may be caused to communicate with short range radio devices in the distributed network to at least one of verify the reported position signal and send the indication of the outcome of the verification. In a further example, a blockchain client may thus act as a node in a decentralized network formed by devices communicating in a short range using radio signals such as BlueTooth, WiFi, or even NFC.

The devices in the short-range network may emit signed messages over the network including the MAC address of the corresponding radio transceiver and the GPS location from its own GPS receiver. The devices may verify the presence of the emitted messages using the MAC address, together with the distance between reported locations within some range. A light consensus mechanism based, for instance, on majority voting, can be established between these devices to flag potential spoofing events to the corresponding device. These flags are useful for both GPS receiver and location-based software services.

The above embodiments may be combined in various ways features allow to avoid or at least reduce GPS spoofing. The embodiments can correspond to two modes of operation of the blockchain client of the apparatus. The apparatus may be configured to use the first one (of applying a base station or other mobile network unit for verifying the position signal is used in the absence of nearby radio devices, whereas the second one (between mobile devices in short-range network) is used when appropriate nearby radio devices are available. As a further example, a positioning information source 10 providing the reported position signal 500 may be authenticated by using at least some of the embodiments illustrated above in connection with Figures 2 to 4.

An electronic device comprising electronic circuitries may be an apparatus for realizing at least some embodiments of the present invention and capable of carrying out at least some of the features illustrated above. The apparatus may be or may be comprised in a computer, a laptop, a tablet computer, a cellular phone, a machine to machine (M2M) device (e.g. a sensor device), a wearable device, or any other apparatus provided with radio communication capability. In another embodiment, the apparatus carrying out the above-described functionalities is comprised in such a device, e.g. the apparatus may comprise a circuitry, such as a chip, a chipset, a microcontroller, or a combination of such circuitries in any one of the above-described devices.

FIGURE 6 illustrates an example apparatus capable of supporting at least some embodiments of the present invention. Illustrated is a device 600, which may comprise the positioning information receiver 10 arranged to operate according to Figure 2 and the further embodiments thereof and/or the apparatus arranged to operate according to Figure 5 and the further embodiments thereof. The device may be arranged to carry out at least some of the embodiments related to verifying authenticity of positioning information and/or source illustrated above. The device may include one or more controllers configured to carry out operations in accordance with at least some of the embodiments illustrated above, such as some or more of the features illustrated in connection with Figures 1 to 5.

Comprised in the device 600 is a processor 602, which may comprise, for example, a single- or multi-core processor wherein a single-core processor comprises one processing core and a multi-core processor comprises more than one processing core. The processor 602 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 600 may comprise memory 604. The memory may comprise random-access memory and/or permanent memory. The memory may comprise at least one RAM chip. The memory may comprise solid-state, magnetic, optical and/or holographic memory, for example. The memory may be at least in part accessible to the processor 602. The memory may be at least in part comprised in the processor 602. The memory 604 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 600 but accessible to the device. Control parameters affecting operations in the device may be stored in one or more portions of the memory and used to control operation of the device.

There are also provided a computer program and a non-transitory computer readable medium having stored thereon a set of computer readable instructions that, when executed by at least one processor, cause an apparatus to perform the method of any one of embodiments illustrated above. For example, the computer program and the computer-readable instructions may be configured to cause the apparatus to perform at least some of the features illustrated in connection with Figures 2, 4 and 5.

The device 600 may comprise a transmitter 606. The device may comprise a receiver 608. The transmitter and the receiver may be configured to transmit and receive, respectively, information in accordance with at least one wired or wireless, cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 600 may comprise a near-field communication, NFC, transceiver 610. The NFC transceiver may support at least one NFC technology, such as NFC, Bluetooth, Wibree or similar technologies.

The device 600 may comprise user interface, UI, 612. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 604 or on a cloud accessible via the transmitter 606 and the receiver 608, or via the NFC transceiver 610, and/or to play games.

The device 600 may comprise or be arranged to accept a user identity module or other type of memory module 614. The user identity module may comprise, for example, a subscriber identity module, SIM installable in the device 600. The user identity module 614 may comprise information identifying a subscription of a user of device 600. The user identity module 614 may comprise cryptographic information usable to verify the identity of a user of device 600 and/or to facilitate encryption and decryption of information effected via the device 600, such as the private and/or public keys as illustrated above.

The processor 602 may be furnished with a transmitter arranged to output information from the processor, via electrical leads internal to the device 600, to other devices comprised in the device. Such a transmitter may comprise a serial bus transmitter arranged to, for example, output information via at least one electrical lead to memory 604 for storage therein. Alternatively to a serial bus, the transmitter may comprise a parallel bus transmitter. Likewise the processor may comprise a receiver arranged to receive information in the processor, via electrical leads internal to the device 600, from other devices comprised in the device 600. Such a receiver may comprise a serial bus receiver arranged to, for example, receive information via at least one electrical lead from the receiver 608 for processing in the processor. Alternatively to a serial bus, the receiver may comprise a parallel bus receiver.

The device 600 may comprise further devices not illustrated in Figure 6. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 610 and/or the user identity module 614.

The processor 602, the memory 604, the transmitter 606, the receiver 608, the NFC transceiver 610, the UI 612 and/or the user identity module 614 may be interconnected by electrical leads internal to the device 600 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 1 to 5 may be taken in isolation or further combined together. For example, embodiments illustrated in connection with Figure 5 may be combined with at least some embodiments illustrated in connection with Figures 2 and 4.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communications.

### ACRONYMS LIST

- API: Application programming interface
- ASIC: Application-specific integrated circuit
- BCBS: Blockchain-based storage
- CHAP: Challenge-handshake authentication protocol
- DRDA: Distributed relational database
- DSA: Digital signature authentication
- EAP: Extensible authentication protocol
- FPGA: Field-programmable gate array
- GSM: Global system for mobile communication
- IC: Integrated Circuit
- LTE: Long term evolution
- M2M: Machine-to-machine
- MAC: Medium access control
- NFC: Near-field communication
- P2P: Peer-to-peer
- PBFT: Practical Byzantine Fault Tolerance
- PoS: Proof-of-stake
- PoW: Proof-of-work
- PPP: Point-to-point authentication protocol
- UI: User interface
- WCDMA: Wideband code division multiple access,
- WiMAX: Worldwide interoperability for microwave access
- WLAN: Wireless local area network

## Claims

1. An apparatus comprising at least one processor, at least one memory including computer program code, the at least one memory and the computer program code being configured to, with the at least one processor, cause the apparatus at least to:
- receive an authentication information element from a positioning information source,
- request verification of authenticity of the positioning information source on the basis of the authentication information element and a distributed ledger of verified positioning information sources, and
- establish a cryptographic session with the positioning information source for receiving positioning information in response to receiving an indication of verification of authenticity of the positioning information source.

2. The apparatus of claim 1, wherein the apparatus is caused to verify authenticity of received positioning information on the basis of a signature provided with the received positioning information during the session, and the apparatus is caused to define a received positioning signal as mock signal in response to failing to receive an appropriate signature for the signal or the verification of the signature associated with the signal failing.

3. The apparatus of claim 1 or 2, wherein the positioning information source is a positioning device and the authentication information element is a public cryptography key stored in the distributed ledger and associated with a secret cryptography key of the positioning device.

4. The apparatus of any preceding claim, wherein the apparatus is caused to establish a shared secret with the positioning information source for the session, and verify the authenticity of the received positioning information on the basis of the shared secret.

5. The apparatus of any preceding claim, wherein the distributed ledger is a private blockchain ledger, generated by transactions of fabricated positioning devices added by positioning device manufacturers, and the apparatus is caused to request verification of the authenticity of the positioning information source on the basis of the blockchain ledger though an application programming interface or one or more intermediate blockchain nodes.

6. The apparatus of any preceding claim, wherein the apparatus is caused to send a digital signature to an access control device controlling access to the distributed storage of verified positioning devices, the access control device being configured to allow verification of the public key on the basis of the distributed storage for authenticated and authorized requesting entities.

7. A mobile communications device, comprising the apparatus according to any preceding claim and the positioning information source.

8. A method, comprising:
- receiving, by a positioning information receiver, an authentication information element from a positioning information source,
- requesting verification of authenticity of the positioning information source on the basis of the authentication information element and a distributed ledger of verified positioning information sources, and
- establishing a cryptographic session with the positioning information source for receiving positioning information in response to receiving an indication of verification of authenticity of the positioning information source.

9. The method of claim 8, further comprising: verifying authenticity of received positioning information on the basis of a signature provided with the received positioning information during the session, and defining a received positioning signal as mock signal in response to failing to receive an appropriate signature for the signal or the verification of the signature associated with the signal failing.

10. The method of claim 8 or 9, wherein the position informationing source is a positioning device and the authentication information element is a public cryptography key stored in the distributed ledger and associated with a secret cryptography key of the positioning device.

11. The method of any preceding claim 8 to 10, further comprising: establishing a shared secret with the positioning information source for the session, and verifying the authenticity of the received positioning information on the basis of the shared secret.

12. The method of any preceding claim 8 to 11, wherein the distributed ledger is a private blockchain ledger, generated by transactions of fabricated positioning devices added by positioning device manufacturers, and verification of the authenticity of the positioning information source is requested on the basis of the blockchain ledger though an application programming interface or one or more intermediate blockchain nodes.

13. The method of any preceding claim 8 to 12, further comprising: sending a digital signature to an access control device controlling access to the distributed storage of verified positioning devices, the access control device being configured to allow verification of the public key on the basis of the distributed storage for authenticated and authorized requesting entities.

14. A computer program configured to, when executed in a computer, cause a method in accordance with at least one of claims 7 to 13 to be performed.

15. A non-transitory computer readable medium having stored thereon a set of computer readable instructions that, when executed by at least one processor, cause an apparatus to perform the method in accordance with any one of the claims 7 to 13.
